# FASCICULE DE BREVET EUROPEEN

(11) **EP 1 167 736 B1**
(45) Date de publication et mention de la délivrance du brevet: **24.08.2005**
(21) Numéro de dépôt: 01401359.3
(22) Date de dépôt: 23.05.2001
(51) Int. Cl.: F02F 1/24, F02B 23/10

(54) **Moteur à combustion interne à allumage commande et à injection directe**
Brennktaftmaschine mit Fremdzündung und Direkteinspritzung
Internal combustion engine with spark ignition and direct injection

(30) Priorité: 26.05.2000 FR 0006753
(43) Date de publication de la demande: 02.01.2002
(73) Titulaire: Renault s.a.s., 92100 Boulogne Billancourt (FR)
(72) Inventeur: Brugirard, Jean Jacques, 92500 Rueil Malmaison (FR); Lefebvre, Alain, 93130 Noisy le Sec (FR); Hauet, Bertrand, 78640 Saint Germain de la Grange (FR)

(56) Documents cités:
- EP-A- 0 839 997
- WO-A-00/12882
- WO-A-00/17505
- DE-A- 19 510 053
- DE-A- 19 749 295
- US-A- 4 077 368
- US-A- 5 335 635

## Description

La présente invention concerne une architecture de chambre de combustion de moteur à combustion interne. Elle porte sur l'implantation de la bougie d'allumage dans une telle architecture, et sur les problèmes liés à l'encrassement de celle-ci en cours de fonctionnement.

Plus précisément, l'invention a pour objet un moteur à combustion interne comprenant une chambre de combustion délimitée par la paroi supérieure d'un piston monté dans un alésage cylindrique d'un bloc cylindres et la paroi inférieure d'une culasse, deux conduits d'admission formés à travers la culasse et débouchant dans la chambre de combustion d'un côté de la surface en toit par deux orifices distincts d'échappement obturés par des soupapes, deux conduits d'échappement formés à travers la culasse et débouchant dans la chambre de combustion du côté opposé aux orifices d'admission par deux orifices distincts d'échappement obturés par des soupapes, un évidemment ménagé dans la culasse et débouchant dans la paroi inférieure de celle-ci, un injecteur de carburant sensiblement parallèle à l'axe du cylindre et débouchant dans l'évidement, et une bougie d'allumage débouchant latéralement dans l'évidement.

Il est connu par la publication WO 00/17505, relative à un moteur de type multicylindres à allumage commandé et injection directe, de disposer les injecteurs de carburant sensiblement dans l'axe des cylindres, chaque injecteur débouchant au sommet de la culasse.

DE 19749295 A et/ou US 4077368 A proposent que le culot de la bougie est en retrait par rapport à la paroi de la chambre de combustion, de façon à créer une discontinuité entre le culot et la paroi, et que la partie supérieure du logement de la bougie présente une arête vive.

La position centrale de l'injecteur de carburant, présente l'avantage de limiter les phénomènes de mouillage de paroi, c'est à dire de limiter le dépôt de particules de carburant sur les parois du cylindre. Cependant, cette architecture conduit à positionner la bougie d'allumage en dessous de l'injecteur, dans la chambre de combustion aménagée dans la culasse.

En l'absence de disposition particulière, lorsque la bougie est placée en dessous de l'injecteur, elle risque de recevoir du carburant jusqu'à sa base, par ruissellement le long de la paroi de la culasse. Le carburant qui ruisselle sous forme liquide jusqu'à la bougie, est ensuite « cracké » sous l'effet de la température de combustion, et forme ainsi un dépôt de carbone à l'extrémité du culot de la bougie.

Le dépôt de carbone s'épaissit à chaque nouveau ruissellement de carburant liquide jusqu'à la bougie. Au bout d'un certain temps, les dépôts accumulés sont tels, qu'ils finissent par rejoindre la base de l'électrode de masse de la bougie, et s'y développent jusqu'à créer un contact entre l'électrode de masse et l'électrode centrale. La bougie ainsi encrassée est alors en court circuit, et ne peut plus assurer son rôle de point d'allumage.

Pour éviter le mouillage direct de la bougie par le jet d'injecteur, il a déjà été proposé de placer des réflecteurs sur le trajet du carburant. Toutefois, les réflecteurs ne permettent pas d'empêcher complètement le ruissellement du carburant jusqu'au culot de la bougie.

La présente invention a pour but de remédier efficacement à ce problème d'encrassement de la bougie, et de garantir ainsi un bon fonctionnement de l'allumage.

Elle y parvient selon les caractéristiques de la revendication, notamment grâce à une disposition particulière de la bougie vis-à-vis des parois de la culasse.

Conformément à l'invention, le culot de la bougie est en retrait par rapport à la paroi de la chambre de combustion, de façon créer une discontinuité entre le culot et la paroi.

De préférence, la partie supérieure du logement de la bougie présente une arête vive.

La présente invention sera mieux comprise à la lecture de la description suivante d'un mode de réalisation particulier de celle-ci, en se reportant aux dessins annexés, sur lesquels :
- la figure 1 montre une culasse à injection directe connue, permettant l'accumulation du carburant à l'extrémité du culot de la bougie, et
- la figure 2 montre une culasse à injection directe mettant en oeuvre l'invention.

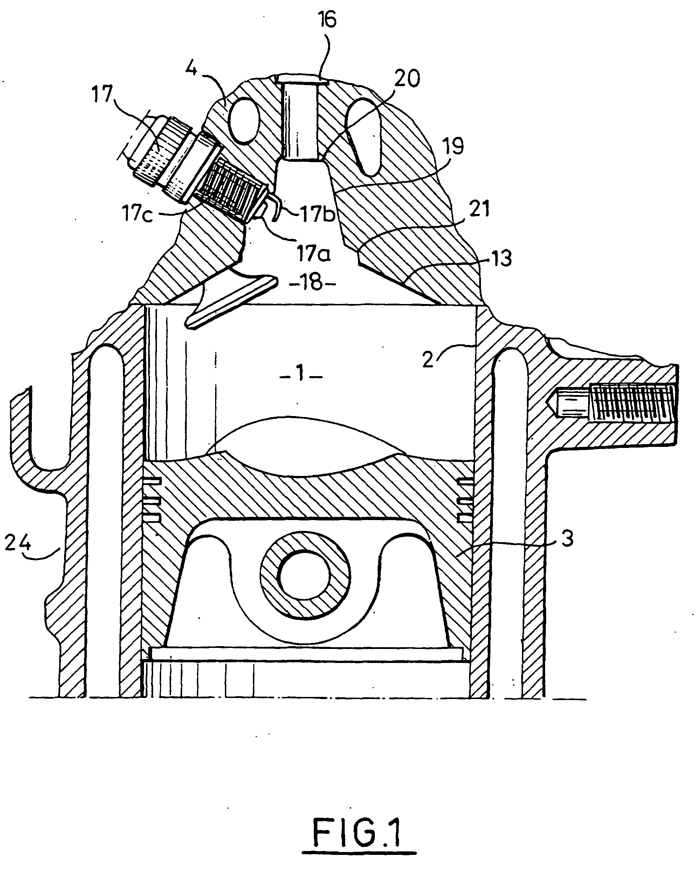

La chambre de combustion 1 de la figure 1 appartient à un moteur à combustion interne (non représenté) par exemple de type multicylindres à quatre temps, allumage commandé, à injection directe de carburant, comportant quatre soupapes par cylindre.

Le corps principal de ce moteur à combustion interne est formé par une culasse 4 surmontant un carter-cylindres 24 apparaissant partiellement sur la figure. Le cylindre 2 loge un piston 3, dont le mouvement alternatif est converti en un mouvement rotatif par un système bielle-vilebrequin, non représenté.

Dans la partie supérieure du cylindre 2, s'étend une chambre de combustion 1, qui est délimitée par la face supérieure du piston 3, la face inférieure 13 de la culasse, et les parois du cylindre 2. La paroi inférieure 13 de la culasse a la forme générale d'un toit à deux pentes, dont l'arête sommitale s'étend sensiblement parallèlement à l'axe sommital de la culasse 4.

Dans chaque chambre de combustion 1, la culasse 4 est traversée par deux conduits d'admission des gaz comburant, et par deux conduits d'échappement des gaz brûlés n'apparaissant pas sur le schéma, qui s'étendent respectivement de part et d'autre de la chambre de combustion par rapport au plan médian longitudinal de la culasse. De façon classique, ces conduite débouchent dans ladite chambre de combustion par des orifices d'admission et d'échappement, qui sont munis de soupapes à tiges permettant d'en contrôler l'ouverture.

Conformément aux dispositions décrites dans la publication WO 00/17505, la paroi inférieure 13 de la culasse 4 présente un évidemment 18 comportant une cavité principale 20 s'étendant sensiblement parallèlement à l'axe du cylindre 2. Dans l'évidement 18, débouchent un injecteur de carburant 16, et une bougie d'allumage 17.

La cavité principale 22 est délimitée dans sa partie supérieure par une paroi de fond 20, où débouche le nez de l'injecteur 16, et une paroi latérale 19, de forme sensiblement ogivale et tronquée, où débouche la bougie d'allumage 17. De même, des cavités secondaires 21, prolongent l'ouverture inférieure de la cavité 22 en direction des quatre pontets inter-soupapes (non représentés), de façon à augmenter le volume de l'évidement 18 sans augmenter la profondeur de la cavité principale 22.

Conformément à la publication précitée, l'injecteur de carburant 16 de la figure 1 est monté à travers la culasse, parallèlement à l'axe du cylindre, de façon à ce que son nez d'injection débouche sensiblement au droit de la paroi de fond de l'évidement 18, en saillie ou bien légèrement en retrait de la paroi de fond 20. Par ailleurs, les dimensions de l'évidement et celles du cône d'éjection de carburant sont adaptées les unes aux autres pour éviter le mouillage direct de la paroi latérale 19 par le jet de carburant, quelles que soient les conditions de fonctionnement du moteur. Enfin, on remarquera que le point d'allumage constitué par l'entrefer des deux électrodes 17a, 17b de la bougie, est situé dans la zone centrale de la chambre de combustion 1.

Comme indiqué plus haut, une telle architecture n'empêche pas que l'écoulement du carburant venant de l'injecteur, atteigne par ruissellement le culot 17c de la bougie 17.

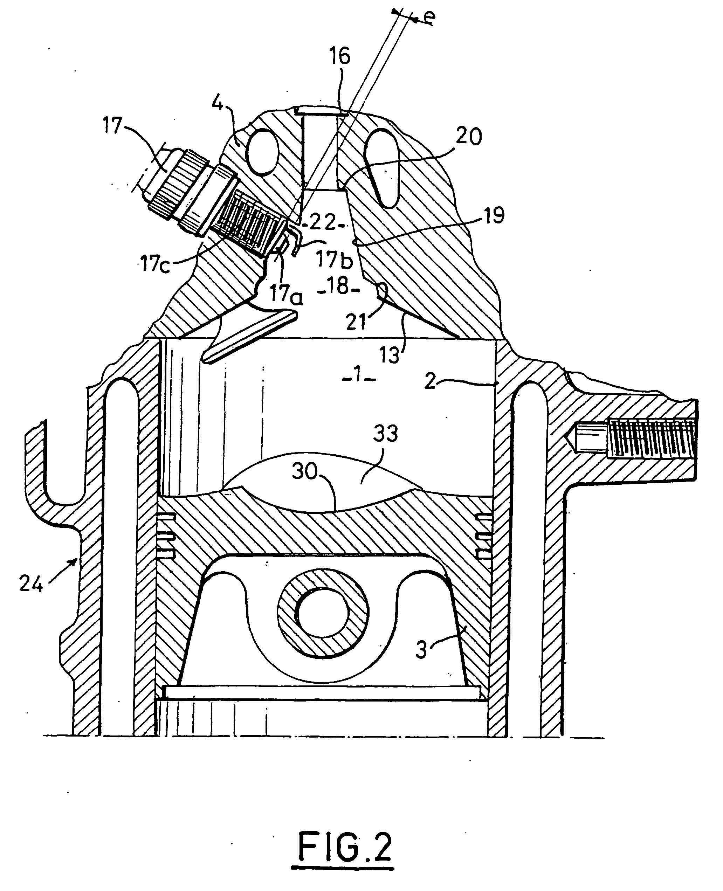

En se reportant à la figure 2, illustrant de façon non limitative un mode de réalisation particulier de l'invention, on retrouve pour l'essentiel l'architecture connue de la figure 1. La culasse 4 de la figure 2 comporte en particulier un injecteur vertical 16, sensiblement parallèle à l'axe du cylindre, l'injecteur 16 débouche dans un évidemment 18 de la culasse 4, et la bougie d'allumage 17 débouche elle aussi dans celle-ci.

Toutefois, comme sur la figure 1, l'entrefer de ses électrodes 17a, 17b est placé sensiblement au centre de la chambre de combustion 1.

L'invention prévoit en effet que l'implantation du culot 17c de la bougie par rapport à la paroi 19 de la chambre de combustion 1, respecte certaines contraintes, pour éviter qu'un ruissellement accidentel de carburant ne vienne s'accumuler à l'extrémité de la bougie. En particulier, le culot 17c de la bougie est en retrait par rapport à la paroi de la chambre de combustion, ce retrait e, étant, de façon préférentielle, au minimum de 0,5 millimètres. Par ailleurs, il est avantageux de maintenir l'entrefer 17a, 17b de la bougie soit disposé dans la zone centrale de la chambre 1.

Ces dispositions ne tiennent pas uniquement compte des caractéristiques du jet de carburant en régime stationnaire, mais également de ses caractéristiques en fonctionnement. En effet, pendant les phases transitoires d'ouverture et de fermeture, la pression de l'injecteur oscille, et les caractéristiques géométriques du jet d'injecteur sont affectées par les transitions de pression d'alimentation, ainsi que par la contre pression du cylindre et par les évolutions de l'aérodynamique interne du moteur. Dans ces états transitoires, les parois de la chambre et du cylindre risquent donc d'être mouillées par le ruissellement et la propagation du carburant par gravité.

En l'absence de disposition particulière, c'est à dire si conformément à l'état de la technique connue, la face du culot de la bougie se trouvait dans la continuité de la paroi, le carburant pourrait atteindre cette face, et se concentrer par capillarité au pied de l'électrode de masse où il serait carbonisé, de façon à créer une couche de carbone d'épaisseur croissante à chaque ruissellement.

Comme indiqué plus haut, l'invention propose de créer une discontinuité entre la paroi de la chambre et le culot de la bougie, en disposant de dernier en retrait de manière à former une arête vive dans la partie supérieure du logement de la bougie. Cette arête vive favorise le décrochage du carburant liquide de la paroi et évite sa propagation en direction du culot de la bougie.

Cette solution est très simple à mettre en oeuvre industriellement. En effet, il suffit de prévoir, avec les intervalles de tolérance, un retrait minimum d'environ 0,5 millimètres sur la côte de l'appui de la bougie, pour obtenir le décrochage du carburant avant sa propagation vers le culot de la bougie.

## Revendications

1. Moteur à combustion interne comprenant :
- une chambre de combustion (1), délimitée par la paroi supérieure d'un piston (3) monté dans un alésage cylindrique (2) d'un bloc cylindres, et la paroi inférieure d'une culasse (4),
- deux conduits d'admission formés à travers la culasse (4) et débouchant dans la chambre de combustion (1) d'un côté de la surface en toit par deux orifices distincts d'admission obturés par des soupapes,
- deux conduits d'échappement formés à travers la culasse (4) et débouchant dans la chambre de combustion (1) du côté opposé aux orifices d'admission par deux orifices distincts d'échappement obturés par des soupapes,
- un évidemment (18) ménagé dans la culasse (4), et débouchant dans la paroi inférieure de celle-ci,
- un injecteur de carburant (16) sensiblement parallèle à l'axe du cylindre (2), et débouchant dans l'évidement (18), et
- une bougie d'allumage (17) débouchant latéralement dans l'évidement (18),
l'entrefer (17a, 17b) de la bougie (17) étant placé sensiblement au centre de la chambre de combustion (1), dont la paroi (19) est de forme sensiblement ogivale ou tronquée, **caractérisé en ce que** le ce que le culot (17c) de la bougie (17) est en retrait par rapport à la paroi (19) de la chambre de combustion, de façon à créer une discontinuité entre le culot et la paroi, et **en ce que** la partie supérieure du logement de la bougie présente une arête vive.

2. Moteur à combustion interne selon la revendication 1, **caractérisé en ce que** le retrait (e) du culot (17c) par rapport à la paroi (19) de la chambre (1) est au minimum de 0,5 milimètres.

## Patentansprüche

1. Verbrennungsmotor, aufweisend:
- eine Brennkammer (1), die durch die obere Wand eines Kolbens (3), der in einer zylindrischen Bohrung (2) eines Zylinderblocks montiert ist, und die untere Wand eines Zylinderkopfes (4) begrenzt ist,
- zwei Einlassleitungen, welche quer durch den Zylinderkopf (4) gebildet sind und welche in die Brennkammer (1) von einer Seite der dachförmigen Oberfläche durch zwei verschiedene Einlassöffnungen münden, die durch Ventile verschlossen sind,
- zwei Auslassleitungen, welche quer durch den Zylinderkopf (4) gebildet sind und welche in die Brennkammer (1) von der den Einlassöffnungen gegenüberliegenden Seite durch zwei verschiedene Auslassöffnungen münden, welche durch Ventile verschlossen sind,
- eine Aussparung (18), die in dem Zylinderkopf (4) ausgespart ist und welche in der unteren Wand von dieser mündet,
- eine Kraftstoff-Einspritzdüse (16), im Wesentlichen parallel zur Achse des Zylinders (2), und welche in die Aussparung (18) mündet, und
- eine Zündkerze (17), welche seitlich in die Aussparung (18) mündet,
wobei der Luftspalt (17a, 17b) der Kerze (17) im Wesentlichen in der Mitte der Brennkammer (1) angeordnet ist, deren Wand (19) von einer im Wesentlichen spitzbogenförmigen und abgeschnittenen Form ist, **dadurch gekennzeichnet, dass** das Gehäuse (17c) der Kerze (17) in Rücksprung im Verhältnis zur Wand (19) der Brennkammer auf solch eine Weise ist, um eine Diskontinuität zwischen dem Gehäuse und der Wand zu erzeugen, und dass der obere Teil der Aufnahme der Kerze eine scharfe Kante aufweist.

2. Verbrennungsmotor nach Anspruch 1, **dadurch, gekennzeichnet, dass** der Rücksprung (e) des Gehäuses (17c) im Verhältnis zur Wand (19) der Kammer (1) mindestens 0,5 Millimeter beträgt.

## Claims

1. An internal combustion engine, comprising:
- a combustion chamber (1) bounded by the upper wall of a piston (3) mounted in a cylindrical bore (2) of a cylinder block and the lower wall of a cylinder head (4),
- two intake ducts formed through the cylinder head (4) and communicating with the combustion chamber (1) on one side of a roof-shaped surface via two separate intake openings closed by valves,
- two exhaust ducts formed through the cylinder head (4) and communicating with the combustion chamber (1) on the side opposite to the intake openings via two separate exhaust openings closed by valves,
- a recess (18) provided on the cylinder head (4) and communicating with the lower wall thereof,
- a fuel injector (16) substantially parallel to the axis of the cylinder (2) ad communicating with the recess (18),
- a spark plug (17) communicating laterally with the recess (18), the air gap (17a, 17b) of the spark plug (17) being disposed substantially at the centre of the combustion chamber (1) whose wall (19) is of substantially ogival or truncated shape, **characterised in that** the cap (17c) of the spark plug (17) is retracted with respect to the wall (19) of the combustion chamber so as to create a discontinuity between the cap and the wall, and **in that** the upper portion of the spark plug housing comprises a sharp edge.

2. An internal combustion engine as claimed in claim 1, **characterised in that** the retraction (e) of the cap (17c) with respect to the wall (19) of the chamber (1) is a minimum of 0.5 mm.
